# EUROPÄISCHE PATENTSCHRIFT

(11) **EP 1 848 180 B1**
(45) Veröffentlichungstag und Bekanntmachung des Hinweises auf die Patenterteilung: **13.02.2013**
(21) Anmeldenummer: 07105933.1
(22) Anmeldetag: 11.04.2007
(51) Int. Cl.: H04L 29/08, H04L 29/06

(54) **Verfahren zur Wiedergabe von textuellen Daten auf Media Renderern in einem UPnP Netzwerk**
Method for reproducing text data on media renderers in a UPnP network
Procédé destiné à la retransmission de données textuelles sur des rendus de milieux dans un réseau UPnP

(30) Priorität: 21.04.2006 DE 102006019360
(43) Veröffentlichungstag der Anmeldung: 24.10.2007
(73) Patentinhaber: Deutsche Telekom AG, 53113 Bonn (DE)
(72) Erfinder: Buchholz, Thomas, 10317, Berlin (DE); Kölln, Florian, 12161, Berlin (DE); Wagner, Thomas, 12627, Berlin (DE); Kraft, Andreas, 14129, Berlin (DE)
(74) Vertreter: Kewitz, Ansgar

(56) Entgegenhaltungen:
- EP-A- 1 475 702
- EP-A- 1 545 064
- US-A1- 2002 107 850
- US-A1- 2005 138 193
- US-B1- 6 698 020

## Beschreibung

Die vorliegende Erfindung betrifft ein Verfahren und eine Vorrichtung zur Wiedergabe von textuellen Daten auf Media Renderern in einem UPnP Netzwerk, und insbesondere einen Mediaserver, der textuelle Daten in den Mediendatenstrom einspeist.

### Gebiet der Erfindung:

In der technischen Literatur und in verschiedenen internationalen Standardisierungsaktivitäten werden verschiedene Verfahren zur Einbettung von textuellen Metainformationen in digitale Medienströme wie z.B. IP und MPEG2 beschrieben [1](White Paper on Streaming Text - MPEG-4 part 17, Jan van der Meer, ISO/IEC JTC1/SC29/WG11N7515, Poznan, July 2005) [2](ID3 Tag version 2.3.0 M. Nilsson, http://www.id3.org/id3v2.3.0.txt, 3rd Febr- 1999). Diese beziehen sich im Wesentlichen auf die Einbettung, Formatierung und Übertragung von Content begleitenden Informationen wie Titel, Album, Interpret, Songtext oder ähnlichem und haben einen direkten Bezug zum übertragenen Content.

Jedoch Verfahren zum Einbringen der Informationen in den Medienstrom und zur dynamischen Anpassung der Ausgabe an die Wiedergabemöglichkeiten des Ausgabegerätes werden nicht beschrieben.

Der UPnP-Standard (www.UPnP.org) steht für Universal Plug and Play, er stellt eine Industrieinitiative dar, die eine einfache und robuste Verbindung zwischen Geräten unterschiedlicher Benutzer erlauben soll. Bei der Medienwiedergabe gibt es einen Media Server, der den Datenstrom bereitstellt und einen Media Renderer, der den Datenstrom so aufbereitet, dass er angezeigt bzw. klanglich ausgegeben wird, sowie einen Control Point, der den Medienstrom zwischen Media Server und Media Renderer steuert.

Dokument US 2002 / 107850 A1 zeigt ein Verfahren zum Extrahieren von Meta-Daten aus Information, die in einer Datenbank abgelegt werden. So können die Information über die Meta-Daten gesucht werden, um die Informationen auf einem Terminal anzuzeigen.

Dokument US 2005 / 0138139 zeigt ein Verfahren zum Bereitstellen von Informationen über UPnP Netzwerk, bei dem der Client unter Verwendung der Meta-Daten beim Server anfragt, ob bestimmt Informationen vorhanden sind, falls dies der Fall ist werden die Daten/Informationen, die die Meta-Daten beschreiben, gesendet.

Dokument EP 1575 702 A2 beschreibt ein Verfahren um TV-Anytime Metadaten in UPnP CDS Metadaten umzuwandeln, die dann wiederum den digitalen Inhaltsdaten zugeordnet werden, um somit über ein UPnP-Suchmodul ein Programm zu finden, das eine eindeutige Kennzeichnung hat, die in den UPnP Daten abgelegt sind.

Dokument EP 1 545064 zeigt ein Proxy-System, das die Meta-Daten in einem lokalen Netzwerk vorhält, so dass diese einem Client schnell zur Verfügung gestellt werden können, wenn nach Inhalten gesucht wird. Sobald der Inhalt bestimmt wurde über die Meta-Daten, wird der Inhalt über das Netzwerk geladen, an das das lokale angebunden ist.

Dokument US 6. 698 020 B1 offenbart ein Verfahren zum Einbetten von Werbung in einen Medienstrom. Diese Daten werden jedoch nicht in die Meta-Daten eingespeist, um abweichende Meta-Daten zu erzeugen.

### Überblick über die Erfindung:

Aufgabe der Erfindung ist die Bereitstellung einer Vorrichtung und eines Verfahrens, das auf der Basis von UPnP Textinformationen in einen Medienstrom einbettet.

Gelöst wird diese Aufgabe durch eine Erfindung mit den Merkmalen der unabhängigen Ansprüche 1, 14, 22 und 23.

Die beschriebene Erfindung ermöglicht die Wiedergabe beliebiger vom Medienstrom unabhängiger Textinformationen auf einem UPnP Wiedergabegerät im IP-Netz.

Die wiederzugebenden Informationen können dabei am zugehörigen UPnP Media - Server, der Quelle der Medienströme dynamisch eingebettet werden. Somit ist eine Übertragung aktueller News, Wetterberichte, Börsendaten, Mails, SMS, Weckrufen oder ähnlichem möglich. Die Steuerung der Auswahl der wiederzugebenden Informationen kann durch den Nutzer selbst oder automatisiert durch eine Drittanwendung remote aus dem IP-Netz heraus erfolgen.

Kann der UPnP-Media Server die Darstellungsfähigkeiten des UPnP - Wiedergabegerätes ermitteln, erfolgt eine Aufbereitung der wiederzugebenden Textinformationen entsprechend den Darstellungsfähigkeiten des Ausgabegerätes.

Erfindungsgemäß gibt es ein IP-basiertes Netz mit Geräten, die die standardisierte UPnP AV Architecture implementieren. In diesem Netz sind der UPnP AV Media Renderer und der entsprechende Media Server angeschlossen und erreichbar.

Ferner gibt es einen UPnP AV Media Renderer mit einer Ausgabeeinheit oder einer sonstigen Möglichkeit zur Anzeige zusätzlicher Medieninformationen (z.B. Titel, Interpret, Album).

Im Testaufbau wurde als UPnP AV Media Renderer ein Terratec Noxon verwendet. Es versteht sich, dass dieses Gerät nur ein mögliches Beispielgerät ist, und durch jegliche andere Geräte ersetzt werden kann. Dieses Testgerät ist ein eigenständiges Gerät, um MP3-Dateien und MP3-Audioströme (z.B. http-Streaming) wiederzugeben. Außerdem ist es in der Lage, MetaInformationen zur Datei respektive zum Strom auf seinem TextDisplay während des Abspielens anzuzeigen, insbesondere den Titel. Der Titel wird ohne Benutzer-Interaktion immer während der Wiedergabe angezeigt, soweit diese Metainformation vom Server bereitgestellt wird.

Ferner gibt es einen UPnP AV Media Server, von welchem der UPnP AV Media Renderer Medienströme beziehen kann.

Als UPnP AV Media Server kann eine Java-Anwendung verwendet werden, die Anfragen auf einen bestimmten Port mit http-Protokoll beantwortet, um z.B. mit dem Content-Type audio/mpeg eine mp3-Datei auf diesem Port auszugeben.

Der UPnP AV Media Server kann auf der Basis einmal bereitgestellter Informationen über die verfügbaren UPnP AV Media Renderer in der Lage sein, die aktuellen Ausgabefähigkeiten des UPnP AV Media Renderer zu bestimmen, um die Ausgabe spezifisch für diese Fähigkeiten aufzubereiten.

Im Testaufbau wurden der in (3) genannten Java-Anwendung die entsprechenden Informationen per http-Parameter übergeben.

Der UPnP AV Media Server hat Zugriff auf beliebige Informationsquellen (innerhalb und außerhalb des IP-Netzes), bzw. diese können ihm von externen Datenlieferanten angeliefert werden. Im Testaufbau lagen diese Informationen als Textdateien vor, welche von dem Media Server, in Form einer Java-Anwendung, bei Bedarf ausgelesen werden konnten. Gleichzeitig wurden diese Textdateien von einer weiteren Anwendung mit neuen Inhalten befüllt (überschrieben). Das Öffnen der Textdateien von der Java-Anwendung ist nur eine Beispielrealisierung des Öffnens einer beliebigen Textquelle (z.B. über das Internet oder das Auslesen bestimmter Elemente eines xml-Dokumentes das lokal oder über einen Web-Dienst bereitsteht).

Der UPnP AV Media Renderer ist in der Lage, zusätzlich zur Wiedergabe, die in einen Medienstrom eingebundenen Informationen darzustellen.

Ferner gibt es einen UPnP AV Control Point, an dem ein Benutzer einen Medienstrom vom UPnP AV Media Serverauswählen kann und diesen auf einem UPnP AV Media Renderer darstellen bzw. ausgeben lassen kann. Der Control Point ist ebenfalls im Terratec Noxon' realisiert, Alternativen sind jedoch denkbar. Mit Hilfe der Fernbedienung kann durch den vom UPnP AV Media Server bereitgestellten Content geblättert und Content zur Wiedergabe ausgewählt werden. Der Control Point dient z.B. zum Vorspulen und Zurückspulen und Auswählen von Titeln.

Durch Anwendung der Erfindung wird der UPnP AV Media Server in die Lage versetzt, jederzeit zusätzliche Informationen in die von einem oder mehreren UPnP AV Media Renderern abgerufenen Medienströme einzubinden, obwohl es sich nicht um Standard Metainformationen zum entsprechenden Datenstrom handelt.

Der oder die UPnP AV Media Renderer stellen diese zusätzlichen Informationen für den Benutzer dar.

Im Testaufbau war es so möglich, z.B. den Terratec Noxon als reines Textdisplay zu verwenden, etwa um Nachrichten oder Alarmmeldungen anzuzeigen, unabhängig von seiner eigentlichen Bestimmung, nämlich die Ausgabe von Audio-Inhalten. Diese Alarmmeldungen können z.B. von Kalendersystemen wie Exchange stammen. Der Media Server würde konstant bzw. regelmäßig auf das Kalendersystem zugreifen, um die Informationen darzustellen.

### Figuren Beschreibung:

Im Folgenden wird die einzige Figur beschrieben, die ein Verständnis der Erfindung erleichtert.

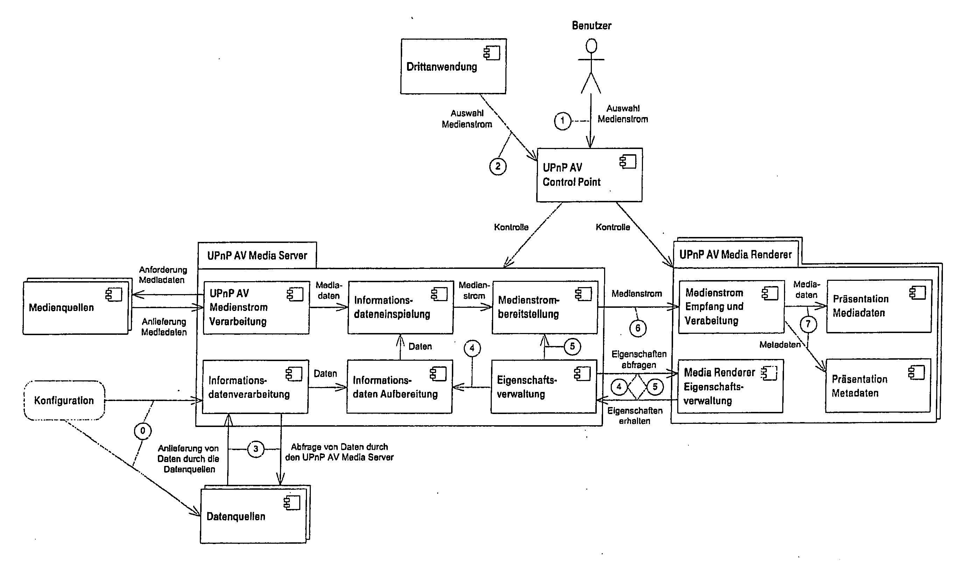

- Figur 1: zeigt den Aufbau der Erfindung und die einzelnen Schritte, die durchgeführt werden.

### Bevorzugte Ausführungsform:

Welche Informationen aus welchen Quellen stammen und wie diese aufbereitet werden, wird vom Benutzer oder einem Dritten vor der Benutzung des Verfahrens oder während des Verfahrens separat konfiguriert (siehe Testaufbau, eine externe Anwendung beschreibt die Textdateien) (Schritt 1 in Fig. 1).

Der Benutzer wählt an einem UPnP AV Control Point einen Medienstrom, welcher von einem UPnP AV Media Server angeboten wird, zur Darstellung bzw. Wiedergabe an einem UPnP AV Media Renderer aus. (Schritt 2 in Fig. 1).

Alternativ kann unabhängig vom Benutzer eine Drittanwendung den Medienstrom am UPnP AV Media Server auswählen und die Wiedergabe auf dem UPnP AV Media Renderer starten (Schritt 3 in Fig. 1).

Der UPnP AV Media Server beschafft sich die zusätzlich wiederzugebenden Informationen selber oder bekommt diese ereignisgesteuert von den Datenquellen angeliefert, wie z.B. von Newstickern oder Werbebannererzeugern oder Mailservern. Diese Informationen werden vom UPnP AV Media Server aufbereitet (Schritt 4 in Fig. 1).

In einer möglichen Ausführungsform wird die Auswahl der Textdatei dem UPnP AV Media Server per http-Parameter übergeben, im Control Point ist die entsprechende Mediendaten/Textdaten-Kombination als URL hinterlegt.

Falls der UPnP AV Media Server die Möglichkeit besitzt, die Darstellungsfähigkeiten des UPnP AV Media Renderes zu ermitteln (siehe oben), so kann er die darzustellenden Informationen für diesen UPnP AV Media Renderer anpassen bzw. aufbereiten. Der UPnP AV Media Server kann, je nach den Metadatendekodierungsfähigkeiten des jeweiligen UPnP AV Media Renderes, das Verfahren zur Einbettung der Informationen in den Medienstrom auswählen (Schritt 5 in Fig. 1).

In einer möglichen Ausführungsform bei der die Java-Anwendung (Schritt 3 als Voraussetzung) den UPnP AV Media Server darstellt, ist für die UPnP-Geräte ein Profil vorgesehen, in dem die Textausgabefähigkeiten verschiedener Geräte hinterlegt werden können. Für den Terratec Noxon z.B. ist dort hinterlegt, dass für Audioströme das Ice-Cast-Metadaten-_{.} Protokoll unterstützt wird, sowie die optimale Zeilenlänge und die optimale Darstellungsgeschwindigkeit.

Falls der UPnP AV Media Server die Möglichkeit besitzt, die Medienstromverarbeitungsfähigkeiten des UPnP AV Media Renderers zu ermitteln (z.B. Decodierverfahren und Bitrate), so kann der UPnP AV Media Server die einzubettenden Informationen dem jeweiligen Medienstrom anpassen. Diese Anpassung kann z.B. die zeitliche Rate sein, in welcher Informationen in den Medienstrom eingebettet werden (Schritt 6 in Fig. 1).

Über das Geräteprofil ist dem UPnP AV Media Server die Decodierfähigkeit des Terratec Noxon bekannt, ebenso die bevorzugten Bitraten. Anhand dieser Bitrate kann der UPnP AV Media Server die zu sendende Mediendatei oder einen Quellmedienstrom mit der passenden Bitrate auswählen. Gegebenenfalls kann eine generierte Mediendatei ausgegeben werden, die nur Stille enthält, um die Ausgabe der Textinformationen sicherzustellen. Aufgrund des beim Noxon eingesetzten Metadatenprotokolls (Icecast) ist folgende Anpassung notwendig: Die im Mediendatenstrom gesendeten Metadaten werden im Icecast-Protokoll in einer festen Datenrate gesendet, unabhängig von der Codier-Bitrate des Mediendatenstroms. Um die optimale Textwiederholrate des Noxon zu erreichen, sollte die Textausgaberate auf die Bitrate der Mediendatenquelle umgerechnet werden. Wenn der UPnP AV Media Renderer ein anderes Metadatenprotokoll benutzen würde, (z.B. id3v2) ist diese Anpassung u.U. nicht nötig bzw. von der Java-Anwendung auf eine andere Weise durchzuführen.

Der angereicherte und unter Umständen angepasste Medienstrom wird vom UPnP AV Media Servermittels eines Transportprotokolls über das Netzwerk an den UPnP AV Media Renderer gesendet. (Schritt 7 in Fig. 1).

Im Testaufbau wurde der angereicherte Datenstrom an den Noxon per http, Content-Type: audio/mpeg, angereichert um zusätzliche Felder des Icecast-Metadatenprotokolls, gesendet.

Der UPnP AV Media Renderer spielt den Medienstrom ab. In diesem sind nun neben den Mediadaten die in den vorigen Schritten vom UPnP AV Media Server hinzugefügten Informationen vorhanden, welche der UPnP AV Media Renderer als Metainformationen extrahiert, interpretiert und darstellt. (Schritt 8 in Fig. 1).

Im Testaufbau stellt der Terratec Noxon, dessen Aufgabe das Abspielen von Audioströmen und Dateien sowie die Anzeige von Titelinformationen ist, Textinformationen dar, die unabhängig von den abgespielten Audioströmen sind. Der Noxon kann auch reine Textinformationen darstellen, in dem der UPnP AV Media Server ihm Medienströme mit Stille liefert, angereichert z.B. mit Nachrichteninformationen. Aufgrund des im UPnP AV Media Server hinterlegten Profils kann der Testaufbau jetzt jeden andere metadatenfähigen UPnP AV Media Renderer als Textausgabegerät verwenden. Wenn einmalig ein entsprechendes Profil gespeichert wurde, reicht es, ein Gerät dieser Geräteklasse in das Netzwerk einzubringen, um es ohne weitere Konfiguration direkt zur Textausgabe zu verwenden (Plug and Play).

Der Schutzumfang wird durch die Ansprüche bestimmt.

## Patentansprüche

1. Server zur Bereitstellung eines Medienstroms, der auf dem UPnP Standard basiert, und Mittel enthält, die dynamisch die Metainformationen des Medienstroms verändern, bevor der Medienstrom über ein Netzwerk zu einem Endgerät gesendet wird, wobei der Inhalt auf dem Endgerät, das den Medienstrom empfängt, auf einer ersten Wiedergabeeinheit wiedergebbar ist, wobei die veränderten Metainformationen vom Medienstrom unabhängige Textinformationen sind, die in die Metainformationen eingebettet sind und die auf einer zweiten Wiedergabeeinheit des Endgerätes anzeigbar sind.

2. Server nach einem oder mehreren der vorhergehenden Ansprüche, wobei der Medienstrom eine Kombination aus verschiedenen Medienarten - Audio, Video, Text - ist, insbesondere aus der Menge: MPEG 3, MPEG 2, MPEG 1.

3. Server nach einem oder mehreren der vorhergehenden Ansprüche, wobei das Endgerät ein Media Renderer ist, der eine Anzeigeeinheit zur Ausgabe von Textinformationen aufweist, auf die der Inhalt der Metainformationen ausgegeben wird.

4. Server nach einem oder mehreren der vorhergehenden Ansprüche, wobei mindestens eine Schnittstelle zu externen Systemen vorhanden ist, von denen die Textinformationen stammen.

5. Server nach dem vorhergehenden Anspruch, wobei das externe System eines oder mehrere der folgenden Systeme ist: Zeitsystem, Mail-System, Kalendersystem, Werbebannersystem, Nachrichtensystem, Textnachrichtensystem.

6. Server nach einem oder mehreren der vorhergehenden Ansprüche, wobei Mittel vorhanden sind, so dass der Server Kenntnis von den Fähigkeiten des Endgerätes erlangt, der als Media-Renderer ausgebildet ist, so dass ein Zugriff auf Leistungsdaten bzw. das Profil des Media-Renderers besteht, wobei das Profil Decodierverfahren und Bitrate umfasst.

7. Server nach dem vorhergehenden Anspruch, wobei Mittel vorhanden sind, die die Art und Form der Einbettung der Textinformationen durch die Fähigkeiten des Endgerätes bestimmen.

8. Server nach dem vorhergehenden Anspruch, wobei Mittel vorhanden sind, die ein oder mehrere der folgenden Kriterien berücksichtigen:
Länge der Textnachricht,
Darstellungsgeschwindigkeit, Textausgaberate umgerechnet auf die Bitrate der Mediendatenquelle.

9. Server nach einem oder mehreren der vorhergehenden Ansprüche, wobei Mittel vorhanden sind, die einen Dummy-Datenstrom übertragen, der lediglich dazu dient, dynamisch veränderte Metainformation zu übertragen.

10. Server nach dem vorhergehenden Anspruch, wobei der Dummy-Datenstrom nur Stille enthält, um die Ausgabe der Textinformationen sicherzustellen.

11. Server nach einem oder mehreren der vorhergehenden Ansprüche, wobei die Metainformationen durch das Icecast-Metadatenprotokoll, ID3v2, Shoutcast StandardLive 365 Protokoll übertragen wird, das dynamisch um zusätzliche Felder angereichert wird.

12. Server nach einem oder mehreren der vorhergehenden Ansprüche, wobei der Medienstrom per den in den Medienstrom einzubettenden Text, insbesondere Textquellen, Displayparamter, per http-Parameter übergeben wird, und in einem Control Point die entsprechende Mediendaten/Textdaten-Kombination als URL hinterlegte ist.

13. Server nach einem oder mehreren der vorhergehenden Ansprüche, umfassend einen Computer, der eine Software aufweist, die die beanspruchte Funktionalität realisiert.

14. Verfahren zur Bereitstellung eines Medienstroms, der auf dem UPnP Standard basiert, umfassend die Schritte:
- Dynamisches Verändern der Metainformationen des Medienstroms, wobei die veränderten Metainformationen vom Medienstrom unabhängige Textinformationen sind;
- Senden des Medienstrom über ein Netzwerk zu einem Endgerät, wobei das Endgerät mindestens zwei Wiedergabeeinheiten aufweist, wobei die erste Einheit zur Wiedergabe des Medienstroms dient und die zweite Wiedergabeeinheit zur Anzeige der Textinformationen.

15. Das Verfahren nach dem vorhergehenden Verfahrensanspruch, **gekennzeichnet durch** das Darstellen des Inhalts auf einem Endgerät, das den Medienstrom empfängt.

16. Verfahren nach einem oder mehreren der vorhergehenden Verfahrensansprüche, wobei mindestens eine Schnittstelle zu externen Systemen vorhanden ist, von denen die Textinformationen gesendet werden wobei das externe System eines oder mehrere der folgenden Systeme ist:
Zeitsystem, Mail-System, Kalendersystem, Werbebannersystem, Nachrichtensystem, Textnachrichtensystem.

17. Verfahren nach einem oder mehreren der vorhergehenden Verfahrensansprüche, wobei der Server Kenntnis von den Fähigkeiten des Endgerätes, der als Media-Renderer ausgebildet ist, durch ein Profil erlangt, indem ein Zugriff aus Leistungsdaten bzw. das Profil des Media-Renderers bestimmt wird, wobei das Profil Decodierverfahren und Bitrate umfasst.

18. Verfahren nach einem oder mehreren der vorhergehenden Verfahrensansprüche, wobei ein Dummy-Datenstrom übertragen wird, der lediglich dazu dient, dynamisch veränderte Metainformation zu übertragen.

19. Verfahren nach dem vorhergehenden Anspruch, wobei der Dummy-Datenstrom nur Stille enthält, um die Ausgabe der Textinformationen sicherzustellen.

20. Verfahren nach einem oder mehreren der vorhergehenden Verfahrensansprüche, wobei die Metainformationen durch das Icecast-Metadatenprotokoll übertragen werden, das -dynamisch um zusätzliche Felder angereichert wird.

21. Verfahren nach einem oder mehreren der vorhergehenden Verfahrensansprüche, wobei die Informationen über den in den Medienstrom einzubettenden Text, insbesondere die Textquelle und Displayparameter, per http-Parameter übergeben werden, wobei in einem Control Point die entsprechende Mediendaten/Textdaten-Kombination als URL hinterlegt ist.

22. Ein Server, der einen Computer mit einer Software beinhaltet, wobei der Server **dadurch gekennzeichnet ist, dass** die Software, wenn sie auf dem Computer ausgeführt wird, ein Verfahren gemäß einem oder mehreren der vorangegangen Verfahrensansprüche 14-21 ausführt.

23. Ein Datenträger, der eine Datenstruktur enthält, die ein Verfahren auf einem Computer implementiert,
wobei der Datenträger **dadurch gekennzeichnet ist, dass**
das von der Datenstruktur auf dem Computer implementierte Verfahren ein Verfahren gemäß einem oder mehreren der vorangegangen Verfahrensansprüche 14-21 ist.

## Claims

1. A server for providing a media stream based on the UPnP standard and containing means dynamically modifying the meta-information of the media stream, before the media stream is transmitted to a terminal via a network, wherein the content can be reproduced on the terminal receiving the media stream on a first reproducing unit, wherein the modified meta-information is text information independent of the media stream, is embedded into the meta-information and can be reproduced on a second reproducing unit of the terminal.

2. The server according to one or more of the preceding claims, wherein the media stream is a combination of different media types - audio, video, text -, in particular from the set: MPEG 3, MPEG 2, MPEG 1.

3. The server according to one or more of the preceding claims, wherein the terminal is a media renderer having a display unit for outputting text information on which the content of the meta-information is displayed.

4. The server according to one or more of the preceding claims, wherein at least one interface to external systems is present, from which systems the external text information originates.

5. The server according to the preceding claim, wherein the external system is one or more of the following systems: time system, mail system, calendar system, banner advertisement system, messaging system, text messaging system.

6. The server according to one or more of the preceding claims, wherein means are present for the server to obtain knowledge on the abilities of the terminal configured as a media renderer, so that access to the performance data or the profile of the media renderer is available, wherein the profile contains decoding methods and bit rate.

7. The server according to the preceding claim, wherein means are present which determine the type and the mode of embedding text information by means of the abilities of the terminal.

8. The server according to the preceding claim, wherein means are present which take into consideration one or more of the following criteria:
length of the text message, displaying speed, text output rate converted into the bit rate of the media data source.

9. Server according to one or more of the preceding claims, wherein means are present which transmit a dummy data stream serving solely to transmit dynamically modified meta-information.

10. The server according to the preceding claim, wherein the dummy data stream contains only silence in order to ensure the output of the text information.

11. The server according to one or more of the preceding claims, wherein the meta-information is transferred by the Icecast metadata protocol, ID3v2, or Shoutcast StandardLive 365 protocol, dynamically extended by additional fields.

12. The server according to one or more of the preceding claims, wherein the media stream is handed over via the text to be embedded into the media stream, in particular text sources, display parameters, via http parameters, and the corresponding media data/text data combination is deposited in a control point as a URL.

13. The server according to one or more of the preceding claims, comprising a computer having a software that implements the claimed functionality.

14. A method for providing a media stream based on the UPnP standard, the method comprising the steps of:
- dynamically modifying the meta-information of the media stream, wherein the modified meta-information is text information independent of the media stream;
- transmitting the media stream to a terminal via a network, wherein the terminal has at least two reproducing units, wherein the first unit serves for reproducing the media stream and the second unit for reproducing the text information.

15. The method according to the preceding method claim, **characterised by** displaying the content on a terminal receiving the media stream.

16. The method according to one or more of the preceding method claims, wherein at least one interface to external systems is present from which the external text information are transmitted, wherein the external system is one or more of the following systems:
time system, mail system, calendar system, banner advertisement system, messaging system, text messaging system.

17. The method according to one or more of the preceding method claims, wherein the server obtains knowledge about the abilities of the terminal configured as a media renderer by means of a profile by determining access from performance data or the profile of the media renderer, wherein the profile comprises decoding methods and bit rate.

18. The method according to one or more of the preceding method claims, wherein a dummy data stream is transmitted which serves solely to transmit dynamically modified meta-information.

19. The method according to the preceding claim, wherein the dummy data stream contains only silence in order to ensure the output of the text information.

20. The method according to one or more of the preceding method claims, wherein the meta-information is transferred by the Icecast metadata protocol which is dynamically extended by additional fields.

21. The method according to one or more of the preceding method claims, wherein the information about the text to be embedded into the media stream, in particular the text source and display parameters, are handed over by means of http parameters, wherein the corresponding media data/text data combination is deposited in a control point as a URL.

22. A server containing a computer with a software, the server being **characterised in that** the software, when being executed on the computer, performs a method according to one or more of the preceding method claims 14 - 21.

23. A data carrier containing a data structure which implements a method on a computer, the data carrier being **characterised in that**
the method implemented on the computer by the data structure is a method according to one or more of the preceding method claims 14 - 21.

## Revendications

1. Serveur pour la fourniture d'un flux de média basé sur le standard UPnP et comportant des moyens qui modifient dynamiquement les méta-informations du flux de média avant que celui-ci ne soit envoyé à un terminal par l'intermédiaire d'un réseau, le contenu étant lisible, au niveau du terminal recevant le flux de média, sur une première unité de lecture, les méta-informations modifiées étant des informations textuelles qui sont indépendantes du flux de média intégrées dans les méta-informations et qui peuvent être affichées sur une deuxième unité de lecture du terminal.

2. Serveur selon l'une ou plusieurs des revendications précédentes, dans lequel le flux de média est une combinaison de différents types de médias - audio, vidéo, texte -, notamment de l'ensemble : MPEG 3, MPEG 2, MPEG 1.

3. Serveur selon l'une ou plusieurs des revendications précédentes, dans lequel le terminal est un moteur de rendu de média comprenant une unité d'affichage d'informations textuelles sur laquelle s'affiche le contenu des méta-informations.

4. Serveur selon l'une ou plusieurs des revendications précédentes, dans lequel au moins une interface est prévue vers des systèmes externes qui ont envoyé les informations textuelles.

5. Serveur selon la revendication précédente, dans lequel le système externe est l'un ou plusieurs des systèmes suivants : système de temps, système de courrier électronique, système calendaire, système de bannières publicitaires, système de messages, système de messages de texte.

6. Serveur selon l'une ou plusieurs des revendications précédentes, dans lequel des moyens sont prévus de manière que le serveur soit informé des capacités du terminal, conçu sous la forme d'un moteur de rendu de média, de manière à permettre l'accès à des données de performance ou au profil du moteur de rendu de média, le profil comprenant des procédés de décodage et le débit binaire.

7. Serveur selon la revendication précédente, dans lequel des moyens sont prévus qui déterminent le type et la forme de l'intégration de l'information textuelle par les capacités du terminal.

8. Serveur selon la revendication précédente, dans lequel des moyens sont prévus qui prennent en compte l'un ou plusieurs des critères suivants : longueur de l'information textuelle, vitesse d'affichage, débit d'émission du texte rapporté au débit binaire de la source des données média.

9. Serveur selon l'une ou plusieurs des revendications précédentes, dans lequel des moyens sont prévus qui transmettent un flux de données factice ne servant qu'à transmettre des méta-informations modifiées.

10. Serveur selon la revendication précédente, dans lequel le flux de données factice ne contient que du silence afin d'assurer l'affichage des informations textuelles.

11. Serveur selon l'une ou plusieurs des revendications précédentes, dans lequel les méta-informations sont transmises par le protocole de métadonnées Icecast, ID3v2 ou le protocole Shoutcast StandardLive 365, enrichi dynamiquement de champs supplémentaires.

12. Serveur selon l'une ou plusieurs des revendications précédentes, dans lequel le flux de média est remis par le texte à intégrer dans le flux de média, notamment des sources de texte, des paramètres d'affichage, par des paramètres http, et dans lequel la combinaison correspondante de données de média et de données de texte est conservée comme URL dans un point de contrôle.

13. Serveur selon l'une ou plusieurs des revendications précédentes, comprenant un ordinateur doté d'un logiciel qui réalise la fonctionnalité sollicitée.

14. Procédé de fourniture d'un flux de média basé sur le standard UPnP comprenant les étapes :
- modification dynamique des méta-informations du flux de média, les méta-informations modifiées étant des informations textuelles qui sont indépendantes du flux de média ;
- envoi du flux de média au terminal par l'intermédiaire d'un réseau, le terminal comportant au moins deux unités de lecture, la première unité servant à la lecture du flux de média et la deuxième unité de lecture servant à l'affichage des informations textuelles.

15. Procédé selon la revendication de procédé précédente, **caractérisé par** l'affichage du contenu sur un terminal recevant le flux de média.

16. Procédé selon l'une ou plusieurs des revendications de procédé précédentes, dans lequel au moins une interface est prévue vers des systèmes externes qui envoient les informations textuelles, le système externe étant un ou plusieurs des systèmes suivants : système de temps, système de courrier électronique, système calendaire, système de bannières publicitaires, système de messages, système de messages de texte.

17. Procédé selon l'une ou plusieurs des revendications de procédé précédentes, dans lequel le serveur est informé des capacités du terminal, conçu sous la forme d'un moteur de rendu de média, par un profil, moyennant détermination d'un accès à des données de performance ou au profil du moteur de rendu de média, le profil comprenant des procédés de décodage et le débit binaire.

18. Procédé selon l'une ou plusieurs des revendications de procédé précédentes, dans lequel un flux de données factice ne servant qu'à transmettre les méta-informations dynamiquement modifiées, est transmis.

19. Procédé selon la revendication précédente, dans lequel le flux de données factice ne contient que du silence afin d'assurer l'affichage des informations textuelles.

20. Procédé selon l'une ou plusieurs des revendications de procédé précédentes, dans lequel les méta-informations sont transmises par le protocole de métadonnées Icecast, enrichi dynamiquement de champs supplémentaires.

21. Procédé selon l'une ou plusieurs des revendications de procédé précédentes, dans lequel les informations sur le texte à intégrer dans le flux de média, notamment des sources de texte, des paramètres d'affichage, sont remises par des paramètres http, et dans lequel la combinaison correspondante de données de média et de données de texte est conservée comme URL dans un point de contrôle.

22. Serveur comprenant un ordinateur doté d'un logiciel, le serveur étant **caractérisé en ce que** le logiciel, lorsqu'il est exécuté sur l'ordinateur, exécute un procédé selon l'une ou plusieurs des revendications de procédé 14 - 21 précédentes.

23. Support de données comprenant une structure de données mettant en oeuvre un procédé dans un ordinateur, le support de données étant **caractérisé en ce que** le procédé mis en oeuvre dans l'ordinateur par la structure de données est un procédé selon l'une ou plusieurs des revendications de procédé 14-21 précédentes.
